# EUROPEAN PATENT APPLICATION

(11) **EP 0 739 648 A1**
(43) Date of publication of application: **30.10.1996**
(21) Application number: 96302745.3
(22) Date of filing: 19.04.1996
(51) Int. Cl.: B01D 53/04, C01B 23/00

(54) **Adsorptive separation of helium**

(30) Priority: 24.04.1995 US 427330
(71) Applicant: THE BOC GROUP, INC., Murray Hill, New Providence, New Jersey 07974 (US)
(72) Inventor: Bulow, Martin, Basking Ridge, New Jersey 07920-3043 (US); Kapoor, Akhilesh, New Providence, New Jersey 07974 (US)
(74) Representative: Gough, Peter

(57) **Abstract**

Helium is adsorbed from a gas mixture containing helium and nitrogen or methane by passing the gas mixture through an adsorbent having pore apertures less than about 0.32 nm in diameter, at a temperature in the range of about 20 to 200°C. The adsorption process is preferably pressure swing adsorption.

## Description

This invention relates to the separation of helium from gas mixtures, and more particularly to the adsorptive separation of helium from gas mixtures using an adsorbent which exhibits stereoselective adsorption for helium relative to adsorption of other components of the gas mixture.

In recent years helium has become increasingly important as an industrial gas. For example, it is used in magnetic resonance imaging (MRI), in lighter than air gas balloons, such as blimps, in breathing gas mixtures used by divers, as a protective gas for welding operations and in a variety of other applications. Helium is present in nature in certain gas mixtures such as air and natural gas. Because it is present in these gas mixtures in extremely small concentrations it is difficult and costly to recover the helium as a substantially pure gas.

Helium is conventionally recovered from the above described gas mixtures by cryogenic distillation. For example, helium is recovered from natural gas via a series of cryogenic distillations. Cryogenic distillation is however, an expensive way to recover helium. Helium can also be separated from gas mixtures by non-cryogenic techniques such as membrane separation and adsorption. EPO Patent 92 695 discloses a pressure swing adsorption process for the purification of helium from a gas mixture comprised of nitrogen, argon, oxygen, helium and other components in minor concentrations. The process disclosed in this patent comprises passing the gas mixture through an adsorbent having an average pore diameter of .3 to .4 nm. As the gases pass through the adsorption bed all of the components except helium (and neon if present) are adsorbed by the adsorbent. The process of this patent is useful for separating helium from gases in which the helium concentration is quite high, for example about 50 to 95 volume percent of the gas mixture

U.S. patent number 5,080,694 discloses another process for the recovery of helium from gas mixtures. It is stated in this patent that the disclosed process is suitable for separating helium from gas mixtures such as natural gas wherein the helium concentration of the mixture is up to about 10% by volume. The process consists of passing the gas stream first through an activated carbon prefilter to remove higher molecular hydrocarbons, and then through an adsorber which contains carbon molecular sieve having an average pore size between 0.1 and 0.4 nm, wherein nitrogen and methane are adsorbed from the gas mixture. This adsorption process is expensive to operate since it involves adsorbing the major components of the gas stream, i.e., nitrogen, methane, etc., while passing helium through as the non-adsorbed gas component.

Research and development efforts are continuously underway to find more efficient and cost effective methods for recovering helium from gas mixtures, particularly gas mixtures in which the helium is present at very small concentrations. A process in which the helium is adsorbed from gas mixtures would be highly desirable, since it could be efficiently used to recover helium from gas streams in which the helium is present at small concentrations. The present invention provides such a process.

In accordance with the invention, helium is separated from a gas mixture containing helium and one or more other gases by an adsorption process in which the helium is adsorbed by the adsorbent in preference to the other gas component(s) of the mixture. The process comprises contacting the gas mixture with an adsorbent that has pore aperture diameters in the range of about 0.25 to about 0.35 nanometers (nm) at a temperature in the range of about 20 to about 200°C. Helium is preferentially adsorbed by adsorbents having pore aperture diameters in this range due to its stereospecific adsorption. Helium has a kinetic atomic diameter of 0.22 nm.

The process is particularly useful for the recovery of helium from gas mixtures, and is most preferred for use in the recovery of helium from methane, nitrogen, oxygen, argon or mixtures of these.

When the adsorbent also has pores having aperture diameters greater than about 0.35 nm, gases other than helium may also be adsorbed by the adsorbent. Accordingly, for successful practice of the invention, it is necessary that the ratio of the number of pores in the adsorbent having aperture diameters in the range of about 0.25 to about 0.35 nm to the number of pores in the adsorbent having aperture diameters greater than about 0.35 nm be sufficiently high to produce an adsorbed phase enriched in helium and a nonadsorbed phase depleted in helium, relative to the concentration of these gases in the feed gas mixture. In general, it is desirable that the ratio of the number of pores in the adsorbent having aperture diameters in the range of about 0.25 to about 0.35 nm to the number of pores in the adsorbent having aperture diameters greater than about 0.35 nm be at least about 0.5, and in preferred embodiments of the invention, this ratio is at least about 1.0. In more preferred embodiments of the invention, no more than about 25% of the pore aperture diameters of the adsorbent are greater than about 0.32 nm, and in most preferred embodiments, substantially none of the pore aperture diameters of the adsorbent are greater than about 0.32 nm.

Adsorbents suitable for use in the process of the invention include sodalites, sodalite cage-containing zeolites, microporous aluminum phosphate having sodalite structures, LTN-type zeolites, synthetic chabazite, clathrasils such as dodecasil-1H and deca-dodecasil 3R, microporous carbons, activated carbon fibers and mixtures of these. Preferred adsorbents include sodalites, microporous aluminum phosphates having sodalite structures, zeolite 3A, activated carbon fibers and mixtures of these. Most preferred adsorbents are the sodalites, including sodalite, hydroxy sodalite, silica sodalite and mixtures of these, and activated carbon fibers. When the process of the invention is practiced using a sodalite cage-containing zeolite, the zeolite is preferably selected from type X zeolites, type Y zeolites, type A zeolites other than zeolite 3A, substantially aluminum-free zeolites, substantially silicon-free zeolites and mixtures of these

The adsorption step of the process of the invention is carried out a temperature in the range of about 20 to about 200°C, and is preferably carried out at a temperature in the range of about 50 to about 200°C. In most preferred embodiments of the invention the adsorption is carried out at a temperature in the range of about 75 to about 150°C. When a sodalite cage-containing zeolite is used as the adsorbent, the adsorption is preferably carried out at a temperature in the range of about 80 to about 200°C.

The adsorption process is generally carried out at an absolute pressure in the range of about 1 to about 40 bar, and is preferably carried out at an absolute pressure of about 2 to about 30 bar.

In a preferred aspect of the invention, the adsorption process is practiced as a cyclic process. In this aspect the process comprises adsorbing helium from a gas mixture containing helium and at least one other gaseous component by a cyclic adsorption method comprising the steps:
(a) passing said gas mixture through an adsorbent at a temperature in the range of about 20 to about 200°C and at superatmospheric pressure, the ratio of the number of pores in said adsorbent having aperture diameters in the range of about 0.25 to 0.35 to the number of pores in said adsorbent having aperture diameters greater than 0.35 being sufficiently high to produce, upon regeneration of said adsorbent, an adsorbed phase enriched in helium and a nonadsorbed phase depleted in helium, relative to the concentration of helium in said gas mixture; and
(b) regenerating the adsorbent, thereby producing a gas component enriched in helium.

The cyclic process of the invention is preferably pressure swing adsorption (PSA) or temperature swing adsorption (TSA) or combinations of these. In most preferred embodiments, the adsorption process is pressure swing adsorption.

In pressure swing adsorption embodiments, bed regeneration is generally carried out by depressurizing the adsorbent to an absolute pressure in the range of about 20 to about 5000 millibar, and in preferred embodiments it is carried out by depressurizing the bed to an absolute pressure in the range of about 100 to about 2000 millibar. In temperature swing adsorption embodiments, the adsorbent is regenerated by heating it to a temperature in the range of about 200 to about 300°C. In either case ( PSA or TSA), adsorbent regeneration may be accomplished or assisted by purging the adsorbent with a gas stream enriched in the helium.

The process of the invention is useful, in general, for separating helium from other gases, such as nitrogen, oxygen, argon, carbon monoxide, carbon dioxide, and methane and higher hydrocarbons. The process is well suited for the recovery of helium from natural gases. It is particularly effective for the recovery of helium from gas mixtures in which the helium is present as a minor component, and particularly at concentrations of about 2 to about 5 volume percent; however it can be effectively practiced for the recovery of helium from gases in which the helium is present at concentrations higher than 5 volume percent.

Broadly speaking, the adsorbents useful in the invention are those which have a sufficient percentage of their pore aperture diameters in the range of about 0.25 to 0.35 nm to produce an adsorbed phase enriched in helium and a nonadsorbed phase depleted in helium, when a gas mixture containing helium is contacted with the adsorbents at a temperature in the range of about 20 to 200°C. The percentage of pores having pore diameters in the range of about 0.25 to 0.35 nm sufficient to accomplish the objectives of the invention depends upon, *inter alia,* the particular gas components of the mixture, the concentration of the components of the gas mixture, the particular adsorbent being used in the adsorption process, and the temperature and pressure at which the adsorption is carried out. Efficient gas separation can often be accomplished using adsorbents in which the ratio of the number of pores having aperture diameters in the range of about 0.25 and 0.35 nm to the number of pores in the adsorbent having aperture diameters greater than about 0.35 nm is at least about 0.5, and more efficient separation can be attained using adsorbents in which the ratio of the number of pores having aperture diameters in the range of about 0.25 to about 0.35 nm to the number of pores in the adsorbent having aperture diameters greater than about 0.35 nm is at least about 1.0. In the most preferred embodiments of the invention substantially all of the adsorbent pore apertures have diameters not greater than about 0.32 nm.

Adsorbents which are suitable for use in the invention include natural and synthetic microporous materials such as the sodalites, including ordinary sodalite, i.e. sodalite containing mixed silica and alumina groups, hydroxy sodalite, aluminum-free silica sodalite, silicon-free alumina sodalite, etc.; aluminophosphates that have sodalite structures, including aluminum phosphate-16, aluminum phosphate-20, etc.; zeolites whose structures include sodalite cages, such as type A, X and Y zeolites; substantially aluminum-free zeolites, such as dealuminated type Y zeolite (DAY), and various other microporous adsorbents, such as LTN-type zeolites, synthetic chabazite, clathrasils, e.g. dodecasil-1H and deca-dodecasil-3R, microporous carbons, activated carbon fibers, etc.

Most preferred adsorbents include the sodalites, the aluminophosphates having sodalite structures and 3A zeolite, substantially all of whose pore diameters are about 0.32 nm or less, and activated carbon fibers with pore diameters less than about 0.35 nm. These adsorbents are stereo-selective with respect to helium, i.e. they readily adsorb helium, but their pore apertures are too small to admit molecules larger than helium.

Somewhat less preferred are the type A zeolites other than zeolite 3A, such as zeolites 4A and 5A, type X and Y zeolites, including dealuminated Y zeolite, all of which contain sodalite cages (β-cages). An appreciable percentage of the pores of these adsorbents have pore aperture diameters greater than about 0.32 nm *(a*-cages). The adsorbents adsorb gases other than helium more strongly in their *α* -cages. However, the equilibrium adsorption capacity of gases in these larger pores decreases with increasing temperatures, whereas high temperatures, for kinetic reasons, favor the adsorption of helium in the sodalite cages of these adsorbents. Hence, these adsorbents, when used at high temperatures, are effective in the practice of the invention to separate helium from other gases. When using these varieties of adsorbents the helium can be separated by means of multi-step desorption.

The adsorption step of the process of the invention is effective at temperatures above about 20°C. In preferred embodiments the temperature at which the adsorption step is carried out is about 50°C or higher. The adsorption step can be carried out at temperatures up to about 200°C, but is preferably carried out at temperatures not greater than about 150°C, particularly when using adsorbents containing sodalite units. The optimum temperature for the adsorption process being practiced will depend upon the particular adsorbent being used, the gas mixture being separated and the adsorption pressure. In general, for stereo-selective adsorption processes, temperatures in the range of about 20 to about 200°C are useful, and for the preferred class of adsorbents, i.e. those whose pore aperture diameters are substantially all 0.32 nm or less, the preferred adsorption temperature is in the range of about 50 to about 150°C. In the most preferred embodiments, i.e. when the adsorbent is a sodalite, the preferred adsorption temperature is in the range of about 100 to about 150°C. Adsorption temperatures for separating helium from other gases using type X or Y zeolites or type A adsorbents other than zeolite 3A are preferably in the range of about 75 to about 200°C. Adsorption temperatures for separating helium from other gases using appropriate microporous carbons and/or activated carbon fibers are generally lower than when using the other adsorbents mentioned above, and may even be lower than 20°C.

The pressures at which the adsorption step is carried out generally ranges from about 1 to about 30 bar absolute and preferably from about 2 to 20 bar absolute for pressure swing adsorption cycles. The optimum pressure at which the adsorption is carried out will depend upon the concentration of helium in the gas mixture being treated. When the gas mixture contains small concentrations of helium, it is preferable to conduct the adsorption step at high pressures.

The process of the invention may be carried out in a single adsorption unit or battery of adsorption units operated in phase, or in a plurality of adsorption units or batteries of adsorption units operated out of phase, whichever is desired. When a system comprising a single adsorption unit or an "in phase" battery of units is used, the adsorption step must be periodically stopped to recover helium by regeneration of the adsorbent bed(s), whereas when a plurality of adsorption units are employed in parallel and operated out of phase, one or more units can be in service adsorbing helium from the feed gas while one or more other units are undergoing regeneration to produce helium product gas.

The process of the invention is generally practiced as a cyclical process, such as pressure swing adsorption, temperature swing adsorption or combinations of these. The process is particularly useful for removing small amounts of helium from gases such as natural gas by pressure swing adsorption.

The method of regeneration of the adsorption beds depends upon the type of adsorption process employed. In the case of pressure swing adsorption, the regeneration phase generally includes a countercurrent depressurization step during which the beds are vented countercurrently until they attain the desired lower pressure. If desired the pressure in the beds may be reduced to subatmospheric pressure by means of a vacuum inducing device, such as a vacuum pump.

Desorption of the helium product from adsorbents which have both sodalite cages and larger microporous cavities is preferably performed by a stepwise procedure. This may comprise two steps, during the first of which compounds being adsorbed into the α-cages will be desorbed, and during the second of which the sodalite units (β-cages) release helium.

When the adsorption process is PSA the regeneration step is generally carried out a temperature in the neighborhood of the temperature at which the adsorption step is carried out and at an absolute pressure lower than the adsorption pressure. The pressure during the regeneration step of PSA cycles is usually in the range of about 20 to about 5000 millibar, and preferably in the range of about 100 to about 2000 millibar.

When the adsorption process is TSA, bed regeneration is carried out at a temperature higher than the adsorption temperature, usually in the range of about 150 to about 300° C, and preferably in the range of about 200 to 250° C. When a combination of PSA and TSA is used the temperature and pressure during the bed regeneration step are higher and lower, respectively, than they are during the adsorption step.

In starting a cyclical process according to the invention, the gaseous feed stream from which helium is to be recovered is introduced into an adsorption vessel containing one or more beds of one or more of the above-mentioned adsorbents. As the gas passes through the bed(s) helium is adsorbed and a substantially helium-free nonadsorbed product gas passes out of the adsorption vessel through the nonadsorbed gas outlet. As the adsorption step proceeds, a helium front forms in the adsorbent bed and slowly moves toward the nonadsorbed gas outlet end of the bed. When the adsorbed helium front traveling through the adsorption vessel(s) reaches the desired point in the vessel(s), the adsorption process in these vessel(s) is terminated and these vessels enter the regeneration mode. During regeneration, the helium-loaded vessels are depressurized, if the adsorption cycle is pressure swing adsorption, or heated, if a temperature swing adsorption cycle is employed.

The adsorption cycle may contain steps other than the fundamental steps of adsorption and regeneration. For example, it may be advantageous to depressurize the adsorption bed in multiple steps, with the first depressurization product being used to partially pressurize another bed in the adsorption system. This will further reduce the amount of helium lost in the nonadsorbed product gas. In some cases it may be desirable to cocurrently purge the adsorption bed at the end of the adsorption step, i.e. prior to carrying out the countercurrent depressurization step. This serves the purpose of forcing nonadsorbed gas component out of the void spaces in the bed, thereby making it possible to produce a higher purity helium product. The purge gas used in this step can be high purity helium obtained from storage or it can be helium-enriched product produced in previous cycles. When the adsorption system comprises multiple adsorbers arranged in parallel and operated out of phase, the helium-enriched product can be obtained from another adsorber that is in the regeneration phase.

The helium adsorption step can be preceded by a purification step to remove from the feed stream higher hydrocarbons and other contaminants that are present in the feed stream and which may adversely affect the performance of the process, e.g. by pore-blocking activity. This is usually accomplished by passing the gas through a bed of activated charcoal. The helium separation step can also be preceded by a feed gas drying step. The drying step is particularly preferred when it is desired to produce a dry helium product stream. In the absence of a pre-drying step, water vapor would generally be adsorbed by the adsorbents used in the invention. This may also lead to pore-blocking activity, which is desirably avoided. The drying step can be accomplished by passing the feed gas through a bed of silica gel, activated alumina, etc.

It will be appreciated that it is within the scope of the present invention to utilize conventional equipment to monitor and automatically regulate the flow of gases within the system so that it can be fully automated to run continuously in an efficient manner.

Although the invention has been described with particular reference to specific embodiments, these embodiments are merely exemplary of the invention and variations are contemplated. For example, the process of the invention can be practiced in equipment arrangements other than those illustrated in the drawings. The scope of the invention is limited only by the breadth of the appended claims.

## Claims

1. A process for separating helium from a gas mixture containing helium and at least one other gaseous component characterised by passing said gas mixture through an adsorbent at temperatures up to about 200°C, the ratio of the number of pores in said adsorbent having aperture diameters in the range of about 0.25 to 0.35 to the number of pores in said adsorbent having aperture diameters greater than 0.35 being sufficiently high to produce an adsorbed phase enriched in helium and a nonadsorbed phase depleted in helium, relative to the concentration of helium in said gas mixture.

2. A process as claimed in claim 1, further comprising regenerating said adsorbent, thereby producing a gas component enriched in helium.

3. A process as claimed in claim 1 or claim 2, characterised in that the adsorption is carried out at an absolute pressure in the range of about 1 to about 40 bar.

4. A process as claimed in any one of claims 1 to 3 characterised in that said gas mixture is passed through said adsorbent at a temperature in the range of about 20 to about 200°C.

5. A process as claimed in claim 2 characterised in that the adsorption method is pressure swing adsorption, and the adsorption step is carried out at an absolute pressure in the range of about 1 to about 40 bar and the adsorbent regenerating step is carried out by depressurizing said adsorbent to an absolute pressure in the range of about 20 to about 5000 millibar.

6. A process as claimed in claim 2 characterised in that the adsorption method is temperature swing adsorption and the adsorbent regenerating step is carried out by heating said adsorbent to a temperature in the range of about 200 to about 300°C.

7. A process as claimed in claim 5 or claim 6, characterised by, between the two steps, the additional step of purging said adsorbent with a gas stream enriched in said gas.

8. A process as claimed in claim 1 or claim 2, characterised in that the ratio of the number of pores having aperture diameters in the range of about 0.25 to 0.35 to the number of pores having aperture diameters greater than 0.35 is at least about 0.5.

9. A process as claimed in claim 1 or claim 2, characterised in that the ratio of the number of pores having aperture diameters in the range of about 0.25 to 0.35 to the number of pores having aperture diameters greater than 0.35 is at least about 1.0.

10. A process as claimed in claim 1 or claim 2, characterised in that substantially none of the pore aperture diameters of the adsorbent are greater than about 0.32 nm.

11. A process as claimed in claim 1 or claim 2, characterised in that said adsorbent is selected from sodalites, sodalite cage-containing zeolites, microporous aluminum phosphate having sodalite structures, LTN-type zeolites, synthetic chabazite, clathrasils, microporous carbons, activated carbon fibers and mixtures of these.

12. A process as claimed in claim 11, characterised in that said adsorbent is a sodalite cage-containing zeolite selected from type X zeolites, type Y zeolites, type A zeolites other than zeolite 3A, substantially aluminum-free zeolites, substantially silicon-free zeolites and mixtures of these, and said gas mixture is passed through said adsorbent at a temperature in the range of about 75 to about 200°C.

13. A process as claimed in claim 11, characterised in that said at least one other gaseous component gas is methane, nitrogen or mixtures of these.
